# EUROPEAN PATENT APPLICATION

(11) **EP 3 409 461 A1**
(43) Date of publication of application: **05.12.2018**
(21) Application number: 17174277.8
(22) Date of filing: 02.06.2017
(51) Int. Cl.: B32B 5/02, B32B 27/08, B32B 27/12, B32B 27/20, B32B 27/22, B32B 27/30, E04F 15/02, E04F 15/10, F21V 33/00, F21S 8/02

(54) **TRANSLUCENT MULTILAYER FLOOR COVERING, E.G., FOR BACKLIT FLOOR CONSTRUCTION**

(71) Applicant: Tarkett GDL, 9779 Lentzweiler (LU)
(72) Inventor: BRANKOV Igor, L-9559 WILTZ (LU)
(74) Representative: Pronovem

(57) **Abstract**

A translucent multilayer floor covering comprises a base layer, a diffuser layer, and a wear layer, the base layer and the wear layer sandwiching the diffuser layer. The base layer, which could be comprised of a single film or of a plural transparent PVC (polyvinyl chloride) films laminated together or of yet another construction, has a PVC content comprised in the range from 50 wt. % to 90 wt.% and at most 15 wt.% of pigment and/or filler particles. Preferably, the base layer has a plasticizer content in the range from 8 wt.% to 35 wt.%.

## Description

### Field of the Invention

The invention generally relates to a translucent multilayer floor covering, e.g., for use as a finishing layer or a backlit floor construction.

### Technical Background

International patent application WO 2016/046364 discloses a floor construction, comprising plural construction layers, the plural construction layers comprising at least one top construction layer and at least one subjacent construction layer underneath the at least one top construction layer, and light sources arranged in one or more patterns in the at least one subjacent construction layer. The at least one top construction layer is translucent so as to hide the light source as well as the patterns when the light sources are off and to reveal the one or more patterns when the light sources are on.

### General Description

According to an aspect of the invention, a translucent multilayer floor covering comprises a base layer, a diffuser layer, and a wear layer, the base layer and the wear layer sandwiching the diffuser layer. The base layer, which could be comprised of a single film or of a plural transparent PVC (polyvinyl chloride) films laminated together or of yet another construction, has a PVC content comprised in the range from 50 wt. % to 90 wt.% (preferably in the range from 60 wt. % to 80 wt.%) and at most 15 wt.% of pigment and/or filler particles (i.e. the total content of filler particles and pigment particles is at most 15 wt.%, preferably less, e.g. at most 10 wt.%, 8 wt.%, 5 wt.%, 2 wt.%). According to an embodiment, the base layer is free or essentially free of filler and pigment. Preferably, the base layer has a plasticizer content in the range from 8 wt.% to 35 wt.% (more preferably in the range from 15 wt. % to 30 wt.%).

According to an embodiment, the wear layer comprises or consists of a PVC-based layer having a PVC content comprised in the range from 50 wt. % to 90 wt.%, a plasticizer content preferably in the range from 8 wt.% to 35 wt.% and at most 15 wt.% of pigment and/or filler particles. Preferably, the PVC-based layer of the wear layer has the same composition as the base layer.

The wear layer could comprise a polyurethane (PU) topcoat applied on the PVC-based layer of the wear layer. The polyurethane topcoat (varnish) could have hard fine inorganic particles (e.g. corundum) suspended therein to increase hardness and resistance to scratching in an amount that does not significantly affect the transparency of the PU topcoat.

The base layer and/or the wear layer comprises one or more stabilizers selected from the group consisting of: UV-light absorbers (e.g., Tinuvin 900 from BASF), hindered amine light stabilizers (e.g., Tinuvin 144 from BASF), other stabilizing agents such as, e.g., Tinuvin 312 and 1130 from BASF, hindered phenolic antioxidants (e.g., Irganox 1010 or Irganox 1076 from BASF), stabilizers of the phosphonite or phosphite type (e.g., Doverphos® S-9228 from Dover Chem. Corp or Weston® TNPP from Addivant) and calcium/zinc stabilizers (e.g. Lastab CZ 518, or Baerostab CT 341 P from Baerlocher). According to a preferred embodiment, the base layer and/or the wear layer comprise a Ca/Zn soap as a stabilizer and epoxidized soybean oil (e.g. Drapex HSE) as a co-stabilizer.

Preferably, both the base layer and the wear layer comprise a hindered phenolic antioxidant (e.g., Irganox 1010 or Irganox 1076 from BASF) as a stabilizer.

According to an embodiment, the diffuser layer comprises or consists of a PVC-based layer having a PVC content comprised in the range from 20 wt. % to 45 wt.% (preferably in the range from 25 wt. % to 40 wt.%), a plasticizer content in the range from 5 wt.% to 25 wt.% (preferably in the range from 10 wt. % to 20 wt.%) and a pigment and/or filler particles content in the range from 30 wt.% to 75 wt.% (preferably in the range from 40 wt. % to 60 wt.%).

According to an embodiment, the diffuser layer comprises a decorative print applied on the PVC-based layer of the diffuser. The thickness of the decorative print is typically less than 5 µm. The decorative print could be applied by any suitable technique, e.g. rotogravure printing, digital printing, etc. It may be worthwhile noting that the decorative print may comprise significant proportion of pigments, provided that it remains translucent when backlit.

Preferably, the PVC-based layer of the diffuser layer comprises calcium carbonate (e.g. Micronic P from Imerys) as a filler (in an amount of, e.g., from 35 to 50 wt.%) and titanium dioxide particles (e.g. Tioxide® R-FC5 from Huntsman) as a pigment (in an amount of, e.g., from 2 to 8 wt.%). Inclusion of TiO₂ is considered advantageous in case a minimum amount of covering power is desired: when the backlighting is off, the diffuser layer reflects part of the impinging ambient light and reveals the decorative print - when the backlighting is on, light transmitted from below through the floor covering outshines the reflected ambient light and reveals the patterns of the light sources.

Preferably, the diffuser comprises a glass veil. Such a glass veil adds dimensional stability to the multilayer floor covering and contributes to the diffusion of the light.

According to an embodiment, the glass veil comprises a PVC impregnation having a PVC content comprised in the range from 50 wt. % to 75 wt.%, a plasticizer content in the range from 25 wt.% to 50 wt.% and at most 15 wt.% of pigment and/or filler particles. The PVC impregnation assures good adherence of the glass veil with the PVC layers of the diffuser and the base layer.

Preferably, the PVC impregnation of the glass veil comprises one or more stabilizers selected from the group consisting of: UV-light absorbers, hindered amine light stabilizers, hindered phenolic antioxidants, stabilizers of the phosphonite or phosphite type and calcium/zinc stabilizers.

According to an embodiment, the PVC impregnation of the glass veil comprises a hindered phenolic antioxidant as a stabilizer.

Preferably, the floor covering is free of phthalate plasticizers. According to a preferred embodiment the plasticizers of the multilayer floor covering consist of 1,4-benzenedicarboxylic acid 1,4-dibutyl ester and/or di-isononyl-cyclohexane-1,2-dicarboxylate, dibutyl terephthalate and/or epoxidized soybean oil.

A particularly preferred embodiment of a translucent multilayer floor covering is that of claims 2, 3, 5, 6, 9, 12 and 14 taken in combination.

A further aspect of the invention relates to a floor construction, comprising:
∘ plural layers, the plural layers comprising at least one top construction layer and at least one subjacent construction layer underneath the at least one top construction layer,
∘ and light sources arranged in one or more patterns in the at least one subjacent construction layer;
∘ wherein the at least one top construction layer comprises or consist of a translucent multilayer floor covering as described.
Preferably, the multilayer floor covering translucent so as to hide the light source as well as the one or more patterns when the light sources are off and to reveal the one or more patterns when the light sources are on.

As used herein, the term "translucent" designates materials that are semi-transparent (i.e. allow light, but not detailed images, to pass through) or transparent (i.e. allow light and detailed images to pass through).

Preferably, the light sources are connected to a controller having a user interface allowing a user to switch one or more of the patterns on and off. The controller may comprise a communications interface (e.g. WLAN, Ethernet, Bluetooth, RFID or the like) and be configured to make its user interface or certain functionalities thereof available over a network, e.g. the Internet. The controller's communication interfaces may e.g. be configured for receiving data from and/or transmitting data to a geolocalization system (e.g. an indoor positioning system) or a facility management software. The controller may be interfaced with a sensing system arranged in the floor construction.

The light sources are preferably LEDs (light emitting devices). Most preferably, the light sources comprise red, green and blue LEDs, and/or white LEDs. The LEDs may be or comprise OLEDs (organic LEDs). The LEDs may be arranged so as to form a dense pixel array underneath the at least one top construction layer. Suitably connected and controlled, such a pixel array may form a giant display screen. Alternatively, the LEDs may be arranged according to one or more line patterns, with relatively large areas of the floor not being backlit. Such arrangement may be used, in particular, to make different line patterns appear upon demand. That alternative may be particularly interesting for multi-sport grounds or halls, as it offers the possibility to display some marking lines appear while concealing the others. The one or more patterns preferably include at least one of emergency path indications, game lines, orientation helps, a logo, a pictogram, a traffic sign and an icon.

Preferably, the floor construction is configured in such a way that the light sources are protected from pressures exerted on the top construction layer. The light sources could e.g. be arranged under a translucent protective cover or be directly embedded in a block of transparent or diffusing material (e.g. polymer material.)

Advantageously, the light sources are individually controllable.

Preferably, the at least one subjacent construction layer comprises a (screed) concrete layer or a self-leveling compound, the light sources being arranged in the (screed) concrete layer or the self-leveling compound.

According to a preferred embodiment of the invention, the floor construction comprises a controller connected to the light sources for controlling the light sources and the revealing of the one or more patterns, and one or more pressure sensors connected to the controller, the pressure sensors being preferably arranged in or underneath the at least one top construction layer in the vicinity of and/or overlapping with the one or more patterns. The controller is preferably configured to control the light sources and the revealing of the one or more patterns depending on signals received by the controller from the one or more pressure sensors and depending upon a selection entered by a user via the user interface. For instance, the user interface may be configured to offer the user the option to make the light sources highlight areas in the vicinity of a line marking that have received a pressure (e.g. from a player's foot or from a ball, etc.). Another option proposed to the user may be to make a line pattern change its colour when an impact (pressure) is detected on a particular side of the line pattern. The pressure sensors could be of the resistive type, of the capacitive type, or a combination thereof. According to a preferred embodiment, the pressure sensors are sheet-type ferroelectret sensors.

According to a preferred embodiment of the invention, the light sources are arranged in one or more two-dimensional arrays forming the one or more patterns, wherein the floor construction comprises a controller connected to the light sources the controller being configured to dynamically control the light sources in such a way as to reveal dynamical patterns as pixel images.

The at least one top construction layer is translucent but not transparent (i.e. it is semi-transparent). In the context of the present document, the top construction layer is considered semi-transparent if at least one of its layers is semi-transparent. In other words, since the at least one top construction layer includes at least one at least one semi-transparent layer (the diffuser layer), the overall effect is semi-transparence and the at least one top construction layer, as a whole, is thus considered semi-transparent.

The multilayer floor covering could comprising a foam layer and/or a calendered polymer sheet as the base layer. The foam layer could e.g. be PVC-based open-cell or closed-cell foam. According to preferred embodiments of the invention, the at least one subjacent construction layer comprises one or more through-shaped channel profiles accommodating the light sources. A preferred aspect of the invention relates to a through-shaped channel profile as such, i.e. as a standalone article, which may be used in a floor construction as presented herein.

The through-shaped channel profiles may e.g. be aluminium or plastic profiles, preferably coated or anodized for increased protection against corrosion or degradation.

Preferably, the through-shaped channel profiles are configured for being or are glued or screwed to the underground. Alternatively or additionally, the channel profiles can be embedded in concrete and/or self-leveling compound.

Preferably, the through-shaped channel profile comprises a base, a first side wall and a second side wall delimiting a channel, wherein said light sources are or may be accommodated. Each of the first side wall and the second side wall preferably comprises a ledge or protrusion for supporting a translucent cover element covering the light sources. The translucent cover element is preferably dimensioned so that its top surface is flush with the top surface of the subjacent construction layer, when the translucent cover element is supported by the ledges or protrusions, so as to form a substantially flat support surface for the at least one top construction layer.

The translucent cover element may be a light diffuser, e.g. made of poly(methyl methacrylate) (PMMA), glass, polycarbonate or other polymers (copolymers or homopolymers), etc.

Preferably, the through-shaped channel profile comprises anchoring elements for anchoring the through-shaped channel profile in the subjacent construction layer.

Preferably, the anchoring elements comprise at least one protrusion or indentation for interlocking the through-shaped channel profile with the subjacent construction layer.

According to a preferred configuration of the floor construction, the subjacent construction layer comprises screed concrete, the top surface of the screed concrete being substantially flush with the upper edges of the one or more through-shaped channel profiles.

The light sources may be encapsulated in one or more translucent polymer blocks arranged in the one or more through-shaped channel profiles, the top surface of the one or more translucent polymer blocks being substantially flush with the upper edges of the one or more through-shaped channel profiles.

According to an alternative embodiment, the light sources are encapsulated in one or more translucent polymer blocks directly embedded in the subjacent construction layer (i.e. without an intermediate channel profile), the subjacent construction layer comprising screed concrete, the top surface of the screed concrete being substantially flush with the top surface of the one or more translucent polymer blocks. In this case, the one or more translucent polymer blocks are preferably glued or screwed to the underground.

The subjacent construction layer may comprise a layer of closed-cell foam, the top surface of the closed-cell foam being substantially flush with the top surface of the one or more translucent polymer blocks. Preferably, the shore hardness of the closed-cell foam is at least approximately equal to the shore hardness of the one or more translucent polymer blocks. Most preferably, the shore A or shore D hardness of the closed-cell foam differs from the shore A or shore D hardness, respectively, of the one or more translucent polymer blocks by not more than 5 units.

### Brief Description of the Drawings

By way of example, preferred, non-limiting embodiments of the invention will now be described in detail with reference to the accompanying drawings, in which:
- Fig. 1:: is a partially cut-away cross-sectional view of a floor construction according to a first preferred embodiment of the invention;
- Fig. 2:: shows the channel profile as used in the embodiment of Fig. 1 and the LEDs arranged therein;
- Fig. 3:: schematically shows variant of the floor construction according to the first preferred embodiment of the invention;
- Fig. 4:: is a perspective view of a polymer block with embedded LEDs as used in a second preferred embodiment of the invention;
- Fig. 5:: is a perspective view of a channel profile having arranged therein a polymer block with embedded LEDs;
- Fig. 6:: is a perspective view of a floor construction according to a further preferred embodiment of the invention;
- Fig. 7:: is a perspective view of the crossing of channel profiles as used in the embodiment of Fig. 1;
- Fig. 8:: is a perspective view of the crossing of channel profiles as used in the embodiment of Fig. 1, wherein it is illustrated how the LEDs in the zone of the intersection cooperate with the LEDs of the interrupted profile series in order to display an apparently continuous or nearly continuous line;
- Fig. 9:: is an illustration of a first application (indoor navigation) of a floor construction according to the invention;
- Fig. 10:: is an illustration of a second application (pedestrian traffic management in private or public transportation facilities) of a floor construction according to the invention;
- Fig. 11:: is an illustration of a third application (interactive sports ground) of a floor construction according to the invention;
- Fig. 12:: is an illustration of an application (player tracking motion) that may be made available as an option in the third application;
- Fig. 13:: is a schematic cross-section of the translucent resilient multilayer floor covering used on top of the subjacent construction layer comprising the light sources.

### Detailed Description of Preferred Exemplary Embodiments

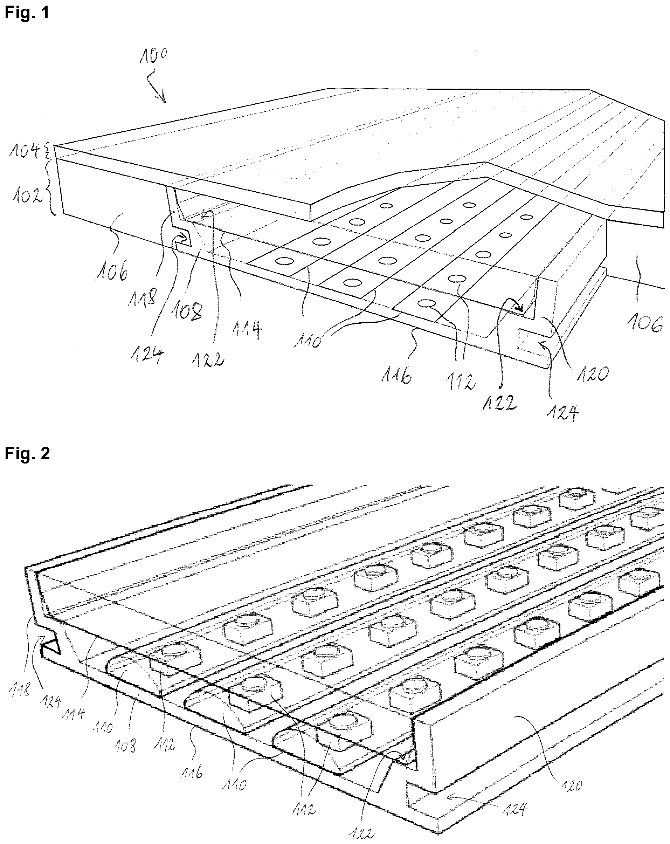

Fig. 1 shows a floor construction 100 according to a preferred embodiment of the invention. The floor construction 100 comprises a subfloor 102 and a decorative synthetic (PVC-based) multilayer floor covering 104 according to the invention arranged on top of the subfloor 102. The subfloor 102 comprises a screed concrete layer 106 and a having trough-shaped channel profiles 108 arranged therein. The trough-shaped channel profiles 108 are preferably made of aluminium and are glued or screwed to the underground. The channel profiles serve to accommodate LED bands 110 with individually addressable and controllable LEDs 112. A light diffuser 114 protects the LED bands 110 against impacts and supports the multilayer floor covering 104 where the multilayer floor covering 104 extends over the channel profiles 108.

The channel profile 108 comprises a base 116, a first side wall 118 and a second side wall 120 delimiting the channel, wherein the LED bands are arranged. Each of the first side wall 118 and the second side wall 120 comprises a ledge 122 supporting the light diffuser 114. Fig. 2 is a perspective view of only the channel profile and the light diffuser 114.

The light diffuser 114 is dimensioned so that its top surface is flush with the top surface of the upper edges of the side walls 118, 120 and with the top surface of the screed concrete.

The channel profile 108 further comprises anchoring elements for anchoring the through-shaped channel profile in the concrete 106. In the illustrated embodiment, the anchoring elements are indentations 124 in the first and second side walls, into which the concrete 106 may penetrate while fluid.

The channel profiles and thus the LEDs are arranged in so as to form line patterns in the subfloor. The multilayer floor covering 104 is translucent so as to hide these patterns when the LEDs are off and to reveal them when LEDs are on.

The LEDs are connected to a controller (not illustrated in Figs. 1 and 2) having a user interface allowing a user to switch one or more of the patterns on and off. As the LEDs are individually addressable, not only the overall pattern of the entirety of the LED can be illuminated, any sub-pattern consisting of any sub-set of the LEDs may be illuminated. The user interface preferably comprises several predefined patterns among which the user may select. According to a preferred embodiment, the user interface may be configured to allow the user to define and to save illumination patterns himself and to add these custom patterns to those that are selectable. The user interface may also be configured to give the user the possibility to define dynamic illumination patterns, i.e. illumination patterns that evolve in time.

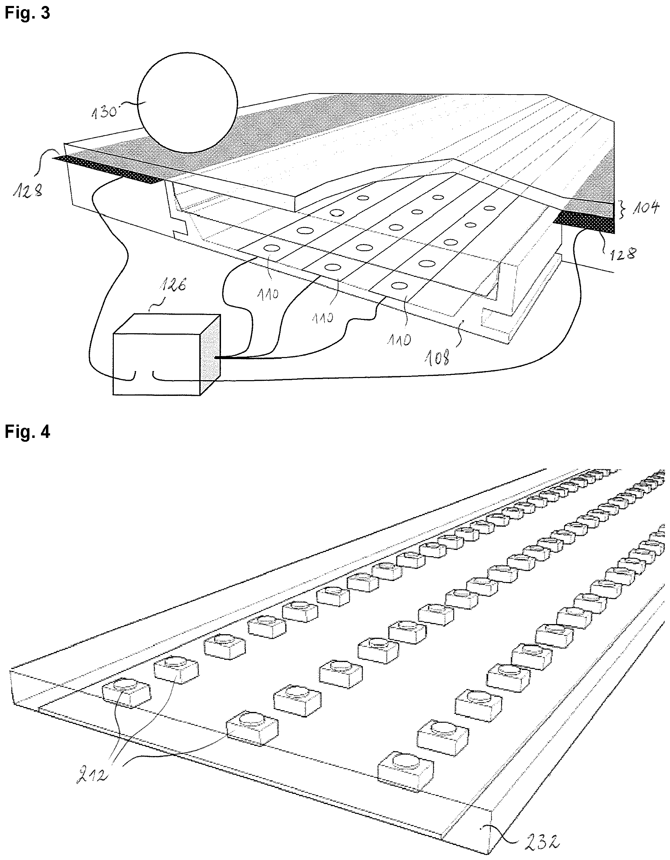

Fig. 3 shows a variant of the floor construction of Fig. 1. For the sake of brevity, elements already discussed with regard to Figs. 1 and 2 are not discussed again. Reference number 126 designates a controller connected to the LED bands 110. The controller 126 comprises a communications interface (preferably a WLAN or Ethernet module, not shown in Fig. 3) and is configured to make its user interface available over a network, e.g. a local area network, a wireless local area network or the Internet. The floor construction of Fig. 3 comprises sheet-type pressure sensors 128 arranged in or underneath the multilayer floor covering 104 and extending alongside the channel profile 108. Each pressure sensor 128 is configured to detect pressure exerted on the floor covering. Optionally, the pressure sensors 128 are configured to detect pressure as a function one or more position coordinates (i.e. in a one- or two-dimensional coordinate system). In this case, several parameters may be detected, such as, e.g., a one- or two-dimensional pressure profile (or pressure distribution), the centroid of a pressure profile, the force associated with a pressure profile (i.e. the integral over the area of the pressure profile), etc. The pressure sensors may be arranged in a two-dimensional (array or matrix) pattern so that a large-scale touch-sensitive surface is formed. In combination with a similarly dimensioned array or matrix pattern of LEDs, a large-scale "touchscreen" may be formed.

The controller 126 may be configured to control the LEDs depending on the signals received from the pressure sensors 128 and on the selection (user preference) entered by a user via the user interface. The user interface is preferably configured to allow the user to switch between different modes, which determine how the LEDs are controlled when certain pressure events are detected by the pressure sensors. For instance, the user interface may offer the user the option to make the LEDs highlight areas in which a pressure was sensed. The intensity of the highlighting could be depending on the amount of pressure detected. The interface could also offer the user the possibility to make the highlighting fade out less rapidly than the pressure decreases. If the illuminated pattern is a sports line marking, the user interface could propose the option of changing a part of the line pattern (e.g. in colour or by varying the intensity of the illumination) when an impact (pressure), e.g. exerted by a ball 130, is detected on a particular side of the line pattern. That functionality could e.g. help to detect an out-of-bounds situation during a sports game.

The installation of the floor constructions of Figs. 1 and 3 is preferably carried out by first gluing, screwing or otherwise fixing the channel profiles to the underground. When the profiles are in place, the leveling concrete is installed (by casting or posing prefabricated slabs) and the LED bands are arranged in the channel profiles. The wiring necessary for the LEDs is also put in place. Preferably, the LEDs are also tested at this stage of the installation. When the LEDs are in place, the diffuser is arranged in the channel profiles. Finally, the decorative floor covering is installed on top of the subfloor formed by the concrete and the channel profiles.

Fig. 4 relates to an embodiment of the invention, wherein the LEDs 212 are embedded (cast) in a translucent polymer block 232. Such a polymer block 232 could be directly embedded in the subfloor (i.e. without an intermediate channel profile as in the embodiment of Figs. 1-3). Compared with the embodiment of Fig. 1, the embodiment of Fig. 4 presents the advantage that less height is required for the installation of the LEDs under the decorative floor covering. The translucent polymer block may be directly embedded in leveling concrete, the top surface of the concrete being substantially flush with the top surface of the polymer block.

Installing a floor construction using polymer blocks as illustrated in Fig. 4 preferably comprises, in a first step, gluing, screwing or otherwise fixing the blocks to the underground and connecting the LEDs. Preferably, the LEDs are tested at this stage. Once the polymer blocks are in place, the leveling concrete is installed. Finally, the decorative floor covering is installed on top of the subfloor formed by the concrete and the polymer blocks. Instead of using concrete to fill the areas between the polymer blocks, other materials could be used. As one possibility, it may be worthwhile mentioning calendered PVC sheets or tiles having the same height as the polymer blocks.

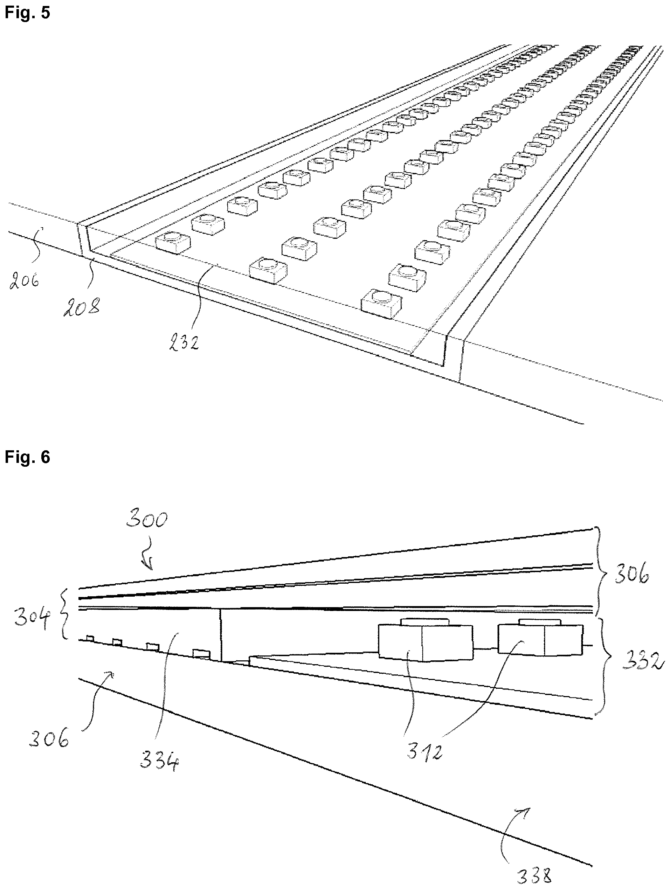

Fig. 5 illustrates an alternative use of the polymer blocks of Fig. 4: instead of directly placing the polymer blocks 232 on the underground, channel profiles 208 are first glued, screwed or otherwise fixed on the underground. Then the polymer blocks with the LEDs are put in place and the LEDs are connected. The areas between the profiles are filled with subfloor material 206 (e.g. concrete or calendered PVC sheets or tiles, etc.) and, finally, the decorative floor covering is installed on top of the subfloor.

Fig. 6 relates to a floor construction 300 according to yet another preferred embodiment of the invention. The floor construction 300 comprises a multilayer decorative floor covering 304 comprising a closed-cell foam backing 334 supporting an assembly of transparent layers 336. The LEDs 312 are encapsulated in a translucent polymer block 332, which is arranged in a space (e.g. recess, clearance, slot, etc.) provided in the closed-cell foam backing 334. The floor construction 300 may be provided as a set of prefabricated sheets or tiles, which are disposed on the underground 338. The closed-cell foam backing 334 and the polymer block 332 are configured so as to have the same or at least similar mechanical features, especially in terms of hardness or resiliency.

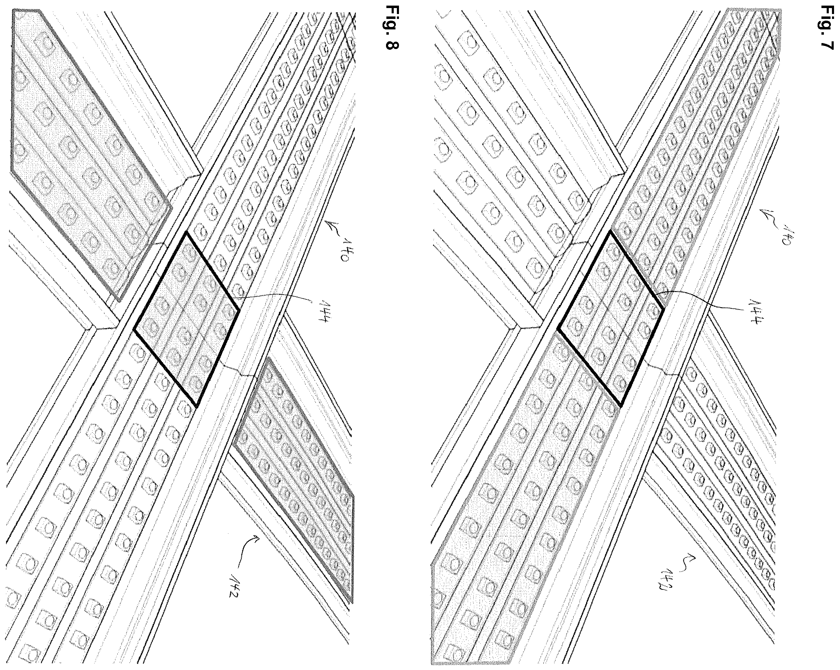

Figs. 7 and 8 illustrate the crossing of two lines defined by LEDs arranged in channel profiles as shown in Figs. 1 to 3. At the location of the crossing, the channel profiles belonging to a first line 140 are arranged directly adjacent each other such that a continuous channel is formed. The channel profiles belonging to the second line 142 abut against the side walls of the channel profiles belonging to the first line. In order to avoid that the second line appears interrupted at the crossing (when the first line is switched off), the LEDs 144 lying in the intersection of the lines are allocated to both the LED pattern corresponding to the first line and the LED pattern corresponding to the second line. That is possible due to the fact that each LED is individually digitally addressable (e.g. by means of a unique identifier) and therefore individually controllable. When the light patterns are programmed, the LEDs in the intersection of two or more patterns are assigned to each of the patterns. In Figs. 7 and 8, the patterns corresponding to the first line 140 and the second line 142, respectively, are shaded grey. The LEDs may be controllable as regards colour, brightness, duration of activation, etc.

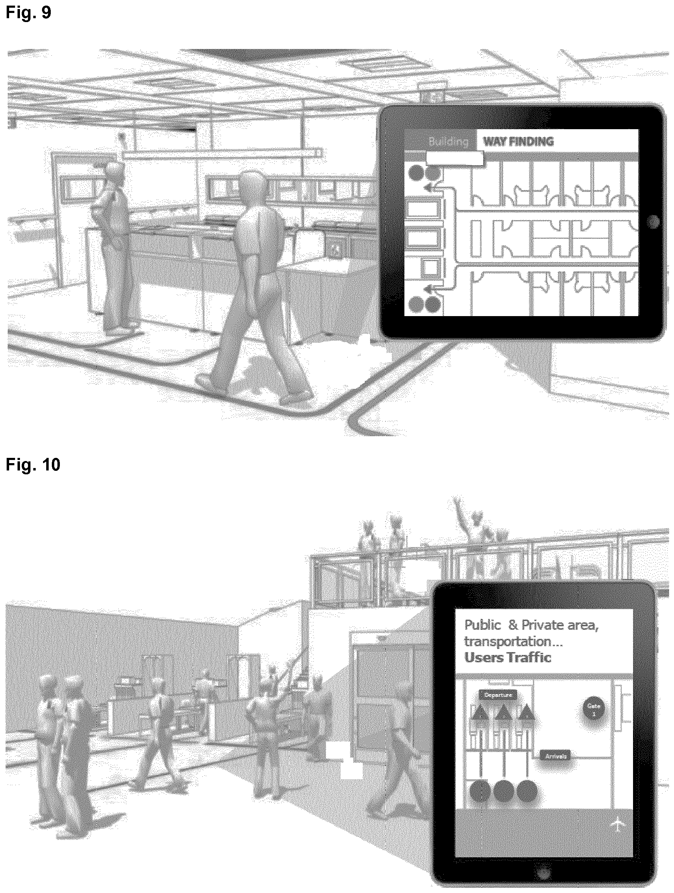

Figs. 9 to 12 illustrate different applications (among others) of floor constructions as presented herein, in combination with a mobile device application.

Fig. 9 shows a building interior equipped with a floor construction configured for displaying guiding markers on the floor. The controller of the LEDs is coupled with a mobile device application ("app") allowing the user to enter a destination. Based upon the user's position and the destination, a path from the current position is calculated and displayed on the floor. The guiding marker could have the form of a line from the starting point to the end point. Alternatively, if the user's position is available in real time from an indoor positioning system, the guiding marker could be a "follow me" sign that moves with the user one or a few meters ahead of him on the computed path. The system could also be used for guiding people to the emergency exits in the event of an evacuation of a building due to an emergency (e.g. fire, earthquake, danger of explosion, etc.) Preferably, the controller is connected to an alarm system and is configured to display the pathways to the emergency exits when the alarm system is triggered.

Fig. 10 shows a public transportation area equipped with a floor construction according to the invention. The floor construction could be used for different functions, such as, e.g., wayfinding, passenger flow regulation, advertising, passenger information, etc.

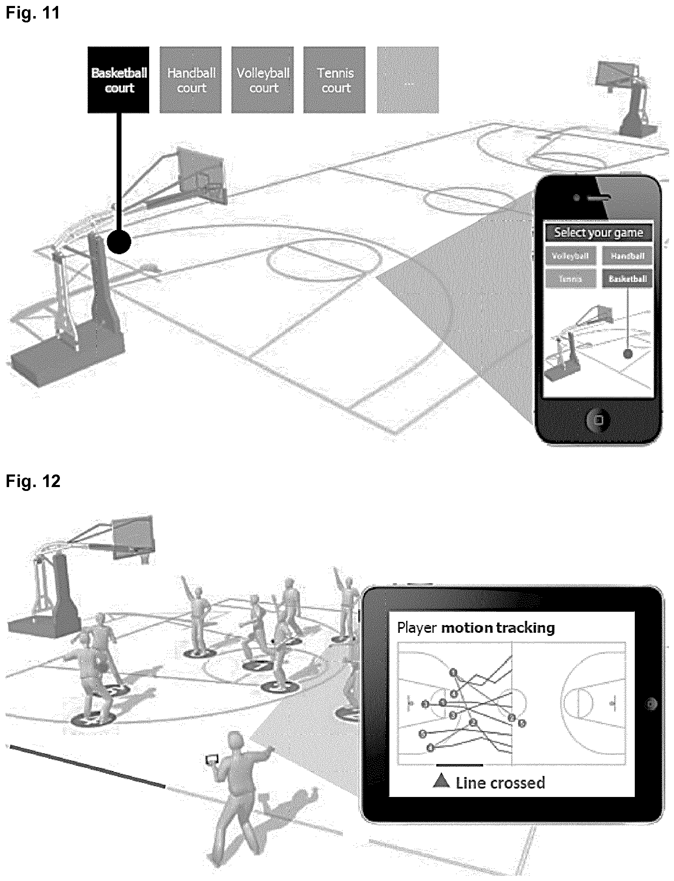

Figs. 11 and 12 show a sports ground equipped with a floor construction as presented herein. The floor construction comprises a two-dimensional array of LEDs arranged underneath the decorative floor covering and stretching out over the whole area of the sports ground, thereby forming a large-scale interactive display. The controller of the LEDs is coupled with an app that allows the user to choose among different line court markings (e.g. of a basketball court, a handball court, a tennis court, a volleyball court, a badminton court, etc., see Fig. 11) and, preferably, also among optional functionalities (e.g. out-of-bounds highlighting, player position highlighting, player motion tracking, etc., see Fig. 12). As an optional feature, the controller may comprise an interface for coupling with an indoor positioning system, capable of tracking the position of the players and the ball. The controller may be interfaced with the sports facility's agenda software (scheduling tool) in order to automatically change the displayed patterns depending on the data (scheduled events) registered in the agenda software. With such implementation, patterns could be automatically switched e.g. from basketball court to tennis court, etc. The application could also display statistical information about the facility's usage, like the number of players, number of hours of game per sport, and then optimize the facility's usage. As an option, the application could also be configured to as to allow the users to book the sports facility online for a certain time interval and, optionally, for a certain sport, and allow him to pay for the booking of the sport facility with credit card or another online payment means (e.g. via PayPal™, near field communication (NFC), etc....)

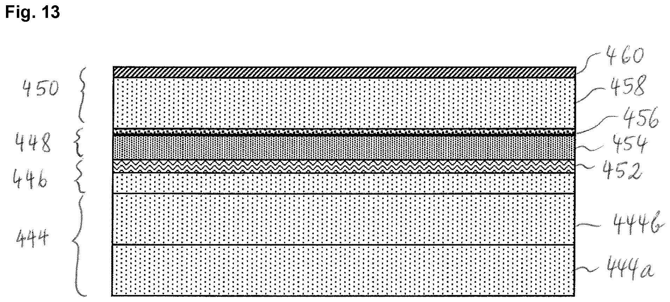

Fig. 13 schematically shows a multilayer floor covering 404 as it may be used in the context of the present invention, in particular but not exclusively, in the illustrated embodiments. The resilient multilayer floor covering 404 comprises a base layer 444, a glass-veil reinforced PVC layer 446, a printed layer 448 and a wear layer 450. The base layer 444 is made of plural PVC-based transparent films 444a, 444b. In the illustrated embodiments, two such films are shown. Their composition is preferably identical. The base layer 444 carries the glass-veil reinforced PVC layer 446, which is obtained from a PVC impregation of a glass veil 452. PVC layer 446 carries the printed layer 448, which is made up of the printing substrate 454 and the print 456. The wear layer 450 is arranged on top of the printed layer 448. The wear layer comprises a PVC-based transparent film 458 and a PU topcoat 460. The glass veil and the printed layer act together as a diffuser layer. The overall height of the multilayer floor covering is preferably comprised between 2 mm and 8 mm. The range from 2 mm to 5 mm may be particularly preferred. Even more preferred may be a height of about 2.5 mm (e.g. in the range from 2.2 mm to 2.8 mm).

An exemplary floor covering construction is indicated in table 1 hereinafter. The decorative print (ink layer), having a thickness of less than 5 µm, is omitted.

| Table 1 | Thickness (mm) | Weight (g/m²) |
|---|---|---|
| PU topcoat | 0.020 | 20 |
| PVC film of wear layer | 0.670 | 875 |
| Printing substrate | 0.102 | 170 |
| Glass veil | 0.050 | 38 |
| Impregnation paste | 0.300 | 360 |
| Upper PVC film of base layer (core layer) | 0.670 | 875 |
| Lower PVC film of base layer (backing layer) | 0.670 | 875 |

The compositions of the different layers are indicated in the following tables. Table 2 indicates example formulations for a transparent PVC film usable as the backing layer, the core layer and the wear layer.

| Table 2 | | Content (wt.%) | | |
|---|---|---|---|---|
| Material type | Raw material | Example 1 | Example 2 | Example 3 |
| PVC | Etinox 610 | 71.5 | 71.6 | 71.6 |
| Plasticizer | Hexamoll DINCH | 21.5 | 17.9 | |
| | Proviplast PLS Green 8 | | | 17.9 |
| Stabilizer | Baerostab CT 341 P | 1.8 | 1.8 | 1.8 |
| Co-stabilizer | Epoxidized soybean oil | 3.8 | 7.15 | 7.15 |
| Additive | LG PA 910 | 1.4 | 1.4 | 1.4 |
| Antioxidant | Irganox 1010 | | 0.15 | 0.15 |
| Total | | 100 | 100 | 100 |

Table 3 indicates example formulations for a film usable as the printing substrate.

| Table 3 | | |
|---|---|---|
| Material type | Material name | Content (wt.%) |
| PVC | Etinox 610 | 11.4 |
| | Etinox 630 | 26.3 |
| Filler | Micronic P | 41.7 |
| Plasticizer | Hexamoll DINCH | 12.5 |
| Stabilizer | Baerostab CT 341 P | 0.9 |
| Co-stabilizer | Epoxidized soybean oil | 1.3 |
| Pigment | Tioxide R-FC5 | 5.2 |
| Additive | LG PA 910 | 0.7 |
| Total | | 100 |

Table 4 indicates example formulations for an impregnation paste of the glass veil.

| Table 4 | | Content (wt.%) | |
|---|---|---|---|
| Material type | Material name | Example A | Example B |
| PVC | Lacovyl PB 1202 | 65 | 64.8 |
| Plasticizer | Elatur CH | 26 | |
| | Dibutyl terephthalate | 6.5 | |
| | Proviplast PLS Green 5 | | 29.2 |
| Stabilizer | Lastab CZ 518 | 0.7 | 1.6 |
| Co-stabilizer | Lastab LM 33 S | 0.5 | 1 |
| | Drapex HSE | 1.3 | 3.25 |
| Antioxidant | Irganox 1010 | | 0.15 |
| Total | | 100 | 100 |

In the above tables, Etinox 610 and 639 (Ercros) are vinyl chloride homopolymers obtained by suspension polymerization, LG PA 910 is an acrylic polymer type processing aid (LG Chem); Hexamoll DINCH (BASF) and Elatur CH (Evonik) are Cyclohexane-1,2-dicarboxylic acid, diisononyl ester (DINCH); Baerostab CT 341 P (Baerlocher) and Labstab CZ 518 are Ca/Zn stabilizers; Labstab LM 33 S is triisotridecyl phosphite and Drapex HSE is epoxidized soybean oil.

A multilayer film combining wear, core and backing layers according to example 3 and an impregnation paste for the glass veil according to example B is particularly preferred for its long-term stability characteristics.

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. Translucent multilayer floor covering, e.g., for a backlit floor construction, comprising a base layer, a diffuser layer, and a wear layer, the base layer and the wear layer sandwiching the diffuser layer,
wherein said base layer, which may be comprised of a single film or a plural transparent PVC films laminated together, has a PVC content comprised in the range from 50 wt. % to 90 wt.% and at most 15 wt.% of pigment and/or filler particles.

2. The translucent multilayer floor covering as claimed in claim 1, wherein the base layer is free of filler and pigment.

3. The translucent multilayer floor covering as claimed in claim 1 or 2, wherein the base layer has a plasticizer content in the range from 8 wt.% to 35 wt.%.

4. The translucent multilayer floor covering as claimed in any one of claims 1 to 3, wherein the wear layer comprises or consists of a PVC-based layer having a PVC content comprised in the range from 50 wt. % to 90 wt.%, a plasticizer content preferably in the range from 8 wt.% to 35 wt.%, and at most 15 wt.% of pigment and/or filler particles, the PVC-based layer of the wear layer preferably having the same composition as the base layer.

5. The translucent multilayer floor covering as claimed in claim 4, wherein the wear layer comprises a polyurethane topcoat applied on the PVC-based layer of the wear layer.

6. The translucent multilayer floor covering as claimed in any one of claims 1 to 5, wherein the base layer and/or the wear layer comprises one or more stabilizers selected from the group consisting of: UV-light absorbers, hindered amine light stabilizers, hindered phenolic antioxidants, stabilizers of the phosphonite or phosphite type and calcium/zinc stabilizers.

7. The translucent multilayer floor covering as claimed in any one of claims 1 to 5, wherein both the base layer and the wear layer comprise a hindered phenolic antioxidant as a stabilizer.

8. The translucent multilayer floor covering as claimed in any one of claims 1 to 7, wherein the diffuser layer comprises or consists of a PVC-based layer having a PVC content comprised in the range from 20 wt. % to 45 wt.%, a plasticizer content in the range from 5 wt.% to 25 wt.% and a pigment and/or filler particles content in the range from 30 wt.% to 75 wt.%.

9. The translucent multilayer floor covering as claimed in claim 8, wherein the diffuser layer comprises a decorative print applied on the PVC-based layer of the diffuser.

10. The translucent multilayer floor covering as claimed in claim 8 or 9, wherein the diffuser comprises a glass veil.

11. The translucent multilayer floor covering as claimed in claim 10, wherein the glass veil comprises a PVC impregnation having a PVC content comprised in the range from 50 wt. % to 75 wt.%, a plasticizer content in the range from 25 wt.% to 50 wt.% and at most 15 wt.% of pigment and/or filler particles.

12. The translucent multilayer floor covering as claimed in claim 11, wherein the PVC impregnation of the glass veil comprises one or more stabilizers selected from the group consisting of: UV-light absorbers, hindered amine light stabilizers, hindered phenolic antioxidants, stabilizers of the phosphonite or phosphite type and and calcium/zinc stabilizers.

13. The translucent multilayer floor covering as claimed in claim 11, wherein the PVC impregnation of the glass veil comprises a hindered phenolic antioxidant as a stabilizer.

14. The translucent multilayer floor covering as claimed in any one of claims 1 to 13, wherein the plasticizers consist of 1,4-benzenedicarboxylic acid 1,4-dibutyl ester and/or di-isononyl-cyclohexane-1,2-dicarboxylate, dibutylterephthalate and/or epoxidized soybean oil.

15. The translucent multilayer floor covering according to claims 2, 3, 5, 6, 9, 12 and 14 in combination.

16. Floor construction, comprising:
plural layers, the plural layers comprising at least one top construction layer and at least one subjacent construction layer underneath the at least one top construction layer,
and light sources arranged in one or more patterns in the at least one subjacent construction layer;
wherein the at least one top construction layer comprises a translucent multilayer floor covering as claimed in any one of claims 1 to 15.
